# EUROPEAN PATENT APPLICATION

(11) **EP 2 077 660 A1**
(43) Date of publication of application: **08.07.2009**
(21) Application number: 08252189.9
(22) Date of filing: 26.06.2008
(51) Int. Cl.: H04N 1/195

(54) **Device for transferring photographic images into digital data**

(30) Priority: 03.01.2008 CN 200820001808 U; 02.04.2008 TW 97205593 U
(71) Applicant: CRS Electronic Co., Ltd., Hsi Chih City, Taipei Hsien (CN)
(72) Inventor: Hsu, Chun-Chieh, Taipei Hsien (TW); Hsu, Chun-chieh, Taipei Hsien (TW)
(74) Representative: Lees, Kate Jane

(57) **Abstract**

A device for transferring photographic images into digital data includes a body (1) wherein a photo taking mechanism (3) is set inside and insert-fit grooves (11) and positioning mechanisms are set with internal lighting printed circuit boards (4) at the other side. A reflecting shield (6) is provided in the body. Integrated photo clamps (5) for clamping photos are put in the interior of the body through the insert-fit grooves. By usage of simple operations, the images on the taken photos can be transferred into digital data by the photo taking mechanisms for convenient storage, modification, or copying then printing the new photos. Thus, the present invention is rich of convenience and advancement.

## Description

### Background of the Invention

The former photographs are normally obtained by utilizing the films for the photo taken through traditional cameras, then printing out the photograph. Once the films are lost, the only thing left is the photograph which is unable to be easily reproduced. If the photos are damaged or lost, the recorded pretty image memory of the past will be hard to be searched. The known way to solve the problem of the loss of film utilizes a camera to aim at the photo to proceed with reproducing the image, then get the new films for provision of storage and the saving of new printing photos. However, the image effects obtained from the reproduced photos by this method are difficult to control. The same quality in the reproduction photos cannot be secured without expertise and professional equipment.

### Summary of the Invention

The main object of the present invention is to provide a device for transferring photographic images into digital data. By usage of a clever assembly structure, the ordinary user can transfer a photographic image into digital data by simple operations for convenient storage, modification, copying then printing of the new photos. Thus, the known disadvantages are overcome.

The present invention provides a device for transferring photographic images into digital data including a body and a lower shell to be assembled as a shallow structure, a reflecting shield provided therein, a photo taking mechanism, two LED (light emitting diode) printed circuit plates set inside and insert-fit grooves set at sides of a top portion of the body to provide an insertion for a photo clamp whereby photographic images provided on the photo clamps are transferred into digital data through the internal photo taking mechanisms.

Now, referring to the accompanying drawings, the character and structure of the present invention will be disclosed as follows:

### Brief Description of the Drawings

Figure 1 is an external view of the present invention;
Figure 2 is a partial bi-sectional analytic drawing of the present invention;
Figure 3 is a detailed bi-sectional analytic drawing of the present invention; and
Figure 4 is an internal assembling structural layout drawing of the present invention.

### Detailed Description of the Preferred Embodiment

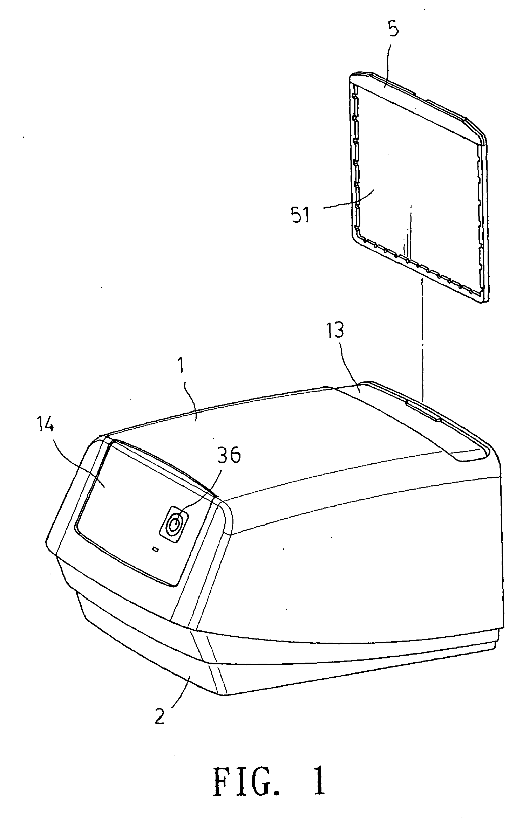

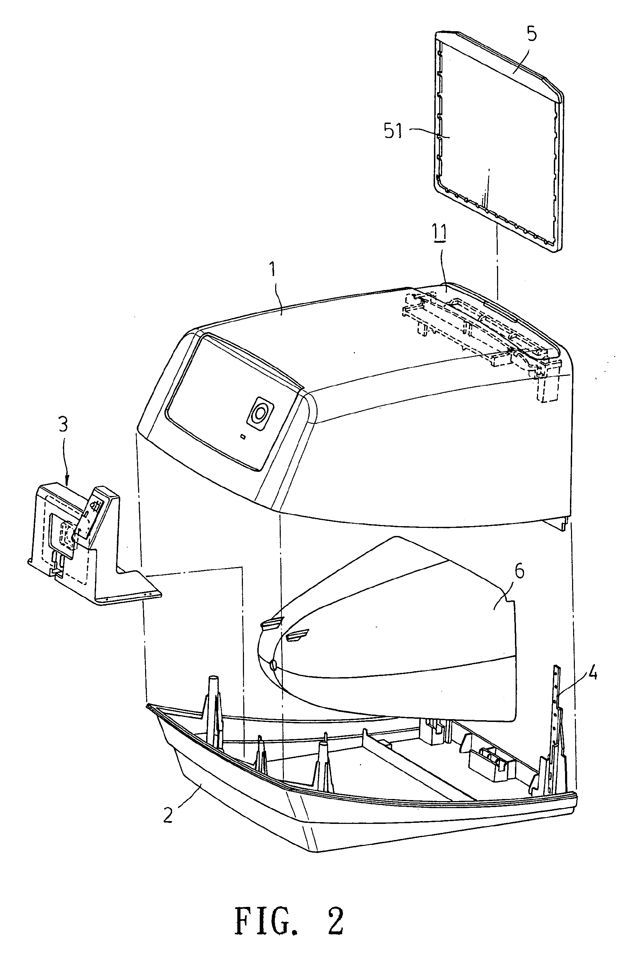

Please refer to the drawings shown in Figures 1 and 2. The present invention is a device for transferring photographic images into digital data including a body (1), a lower shell (2), a photo taking mechanism (3), and two LED (light emitting diode) printed circuit boards (4), wherein the body (1) and the lower shell (2) are assembled as a shallow structure. A reflecting shield (6) is provided therein. Insert-fit grooves (11) are provided at sides of a top portion of body (1) to provide an insertion for a photo clamp (5). The photos (51) taking from photo clamps (5) through internal photo taking mechanisms (3) are transferred into digital data for convenient long term storage, and the further modification, copying and printing of the new photos is possible. Thus, the present invention is rich of effects of convenience and accurate reproducing.

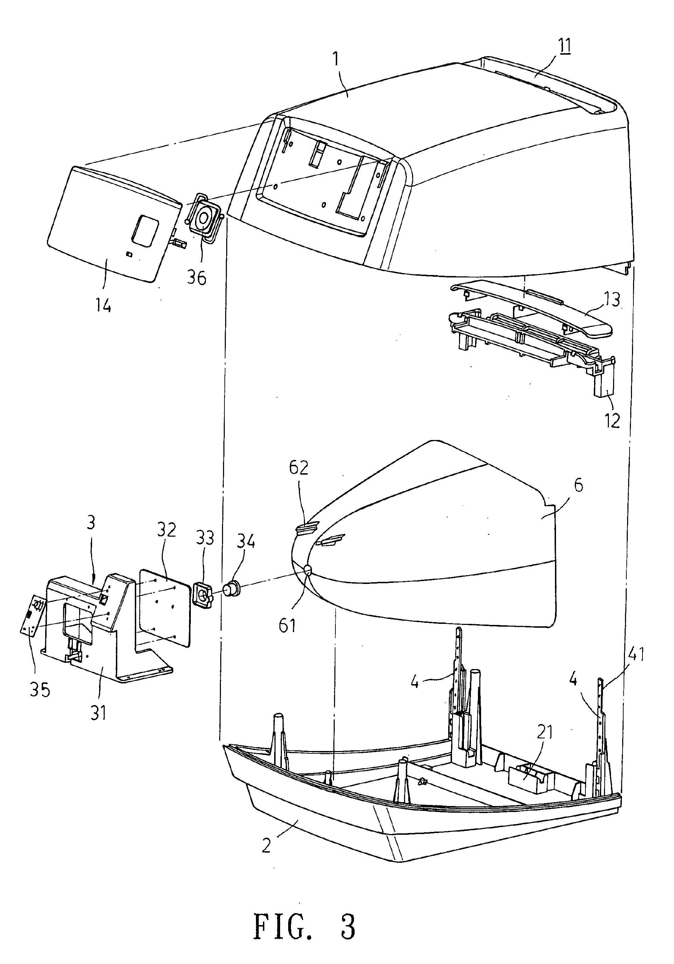

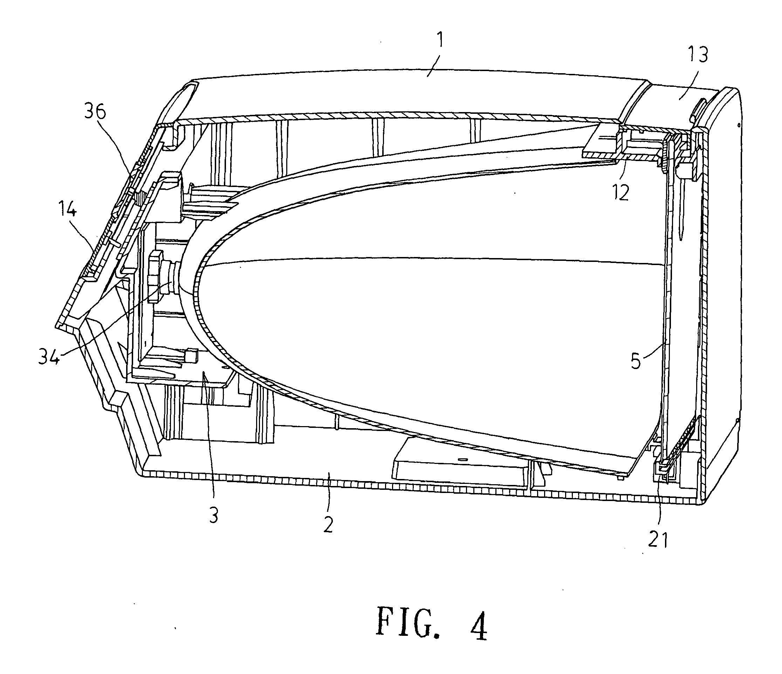

Please refer to Figures 3 and 4. The detailed structure of the present invention mainly includes a photo taking mechanism (3) assembled in one side of the interior of body (1). The photo taking mechanism (3) includes a brace (31) for mounting a PCBA (32) (printed circuit board assembly), and a camera lens (34) is aimed in the interior of another side of the body (1) by combining the lens frame (33) and lens (34). The reflecting shield (6) provided in the interior of the body (1) is semi-oval-like and has at one end an aperture (61) to hold the lens (34) and at the other end an opening. The shield (61) has two connecting pieces (62) for engaging within the body (1). A positioning frame (12) with a clamping door (13) is set at an internal lower side of the insert-fit groove (11) on the top side of body (1), and a clip-fit seat (21) is set at the bottom of an internal side of the lower shell (2). Furthermore, two LED printed circuit boards (4) are set vertically in the back of the interior of the body (1) and lower shell (2). The brace (31) is further combined with a control board (35) and a protruding-out button (36) and its exterior is covered by a decorative panel (14).

During operation of the device, the processed photos (31) are firstly fixed on the photo clamps (3), the clamp door (13) is opened to put in the photos through the insert-fit groove (11), and the lower end is fixed on the clip-fit seat (21) to just face the photos (3) to the photo taking lens (34). After pressing the button (36), the light emitting from each of the LEDs (41) on the two LED printed circuit boards (4) is controlled, projected on to the inner surface of the reflecting shield and then reflected on to the photos (51) and photos are taken at the same time. Thus the exact same image as the photograph is accessed and processed by programs then transferred into digital data for convenient storage, modification or copying then printing the new photos. In use of the reflected light from the shield (6), the picture of the photo (51) will be taken with higher quality when transferring to digital data.

By summarizing the aforementioned, the present invention enables the ordinary user to reproduce images from any photographs then transfer the image into digital data for further usage immediately, under easy and simple operations and without excellent photo taking technologies and professional equipment. The known problems are thus solved.

## Claims

1. A device for transferring photographic images into digital data including a body (1) and a lower shell (2) to be assembled as a shallow structure, a reflecting shield (6) provided therein, a photo taking mechanism (3), two LED (light emitting diode) printed circuit plates (4) set inside and insert-fit grooves (11) set at sides of a top portion of the body to provide an insertion for a photo clamp (5) whereby photographic images provided on the photo clamps are transferred into digital data through the internal photo taking mechanisms.

2. The device as claimed in claim 1, wherein the photo taking mechanism (3) includes a brace (31) for mounting a PCBA (printed circuit board assembly) (32), and a camera lens (34) is aimed in the interior of another side of the body by combining the lens frame and lens.

3. The device as claimed in claim 1, wherein a positioning frame (12) with a clamping door (13) is set at an internal lower side of the insert-fit groove (11), and a relative clip-fit seat (21) is set at a bottom of an internal side of the lower shell (2).

4. The device as claimed in claim 2, wherein the brace is further combined with a control board (35) and protruding-out button (36), and its exterior is covered by a decorative panel (14).

5. The device as claimed in claim 1, wherein the reflecting shield has at one end an aperture to hold the lens and at its other end has an opening.

6. The device as claimed in claim 5 wherein the reflecting shield is semi-oval-like.
